# EUROPÄISCHE PATENTSCHRIFT

(11) **EP 0 669 368 B1**
(45) Veröffentlichungstag und Bekanntmachung des Hinweises auf die Patenterteilung: **20.10.1999**
(21) Anmeldenummer: 95101526.2
(22) Anmeldetag: 04.02.1995
(51) Int. Cl.: C08K 9/08, C08L 101/00

(54) **Thermoplaste enthaltend in-situ verkapselte Füllstoffe**
In-situ encapsulated filler containing thermoplastic resin
Résine thermoplastique contenant une charge encapsulée in-situ

(30) Priorität: 23.02.1994 DE 4405745
(43) Veröffentlichungstag der Anmeldung: 30.08.1995
(73) Patentinhaber: REHAU AG + Co, 95111 Rehau (DE)
(72) Erfinder: Mülhaupt, Rolf, Prof. Dr., D-79117 Freiburg (DE); Rösch, Joachim, Dipl.-Chem. Dr., D-67069 Ludwigshafen (DE); Barghoorn, Peter, Dipl.-Chem., D-79199 Kirchzarten (DE); Hopperdietzel, Siegfried, Dr., D-95111 Rehau (DE); Poersch, Franz, Dr., D-95111 Rehau (DE); Weinberg, Ekkehard, Dr., D-95111 Rehau (DE); Klein, Herbert, Dr., D-95111 Rehau (DE)

(56) Entgegenhaltungen:
- EP-A- 0 217 563
- EP-A- 0 535 526
- EP-A- 0 536 966
- DATABASE WPI Section Ch, Week 7211 Derwent Publications Ltd., London, GB; Class A17, AN 72-18216T & JP-A-47 008 931 (ASAHI CHEMICAL)

## Beschreibung

Die vorliegende Erfindung betrifft thermoplastisch verarbeitbare, Polyester und anorganische Füllstoffe enthaltende Polymergemische, die mindestens die folgenden vier Komponenten enthalten: Komponente (A) bestehend aus einem oder mehreren thermoplastischen Polymeren, die in der Schmelze bei Temperaturen bis zu 400 Grad Celsius verarbeitbar sind; Komponente (B), bestehend aus einem oder mehreren Füllstoffen, die in den Komponenten (A), (C), (D) unlöslich sind, zu mehr als 50 Gew.-% aus anorganischen Bestandteilen bestehen, und deren mittlere Partikeldurchmesser kleiner als 100µm sind; Komponente (C), bestehend aus einem oder mehreren linearen, verzweigten oder cyclischen, nieder- oder hochmolekularen Mono-, Di-, Tri-, Tetra- oder Polycarbonsäureanhydriden mit dem Strukturelement R₁(CO-O-CO)ₓ, worin R₁ zwei- oder mehrwertige, aliphatische, cycloaliphatische, aromatische, araliphatische, heterocyclische oder heteroatomhaltige Reste bedeuten und x eine ganze Zahl von 1 bis 500 ist, oder ein oder mehrere Polycarbonsäureanhydride der allgeinenen Strukturformel (CO-R₂-CO-O)_{y}, wobei R₂ ein zweiwertiger aliphatischer, cycloaliphatischer, aromatischer, araliphatischer, heterocyclischer oder heteroatomhaltiger Rest bedeutet und y eine ganze Zahl von 1 bis 100 ist; Komponente (D), bestehend aus einer oder mehreren linearen, verzweigten oder cyclischen nieder- und hochmolekulare Verbindungen, die über mindestens eine Oxirangruppe verfügen; wobei Komponenten (C) und (D) miteinander in der Schmelze der Komponente (A) in der Gegenwart von Komponente (B) miteinander zur Reaktion gebracht werden, lineare, verzweigte oder vernetzte Polyester bilden und Komponente (B) verkapseln. Die vorliegende Erfindung ermöglicht die Herstellung von neuartigen Materialien, die als Formmassen, Filme, Folien, Schläuche, Extrudate und Klebstoffe anwendbar sind. Durch Reaktion der Komponenten (C) und (D) können Füllstoffe, respektive Komponente (B), mit Polyester während der Verarbeitung verkapselt werden. Durch diese Verkapselung kann die Haftung zwischen den Komponenten (B) und (A) verbessert werden. Ferner können durch Wahl der Komponenten (C) und (D) die Grenzschichten zwischen Komponenten (A) und (B) gezielt variiert werden, um gleichzeitig Steifigkeiten und Schlagzähigkeiten von gefüllten Thermoplasten zu verbessern. Die erfindungsgemäßen Zusammensetzungen eignen sich besonders für die in-situ Verkapselung von Komponenten (B) auf Silikatbasis, z.B. Talkum.

In der Technik werden heute eine Vielzahl von Füllstoffe eingesetzt, um die Kosten von Formmassen zu senken und das Eigenschaftsspektrum von thermoplastischen Polymeren zu verändern. Von besonderem Interesse, z.B. für Anwendungen von Kunststoffen als Werkstoffe für Konstruktionen und Ersatz von metallischen Werkstoffen, sind Füllstoffe, welche die Matrix des Kunststoffes verstärken. Diese Verstärkungswirkung manifestiert sich beispielsweise in erhöhten Elastizitätsmodul- oder Zugfestigkeitswerten. Wie beispielsweise von H.P.Schlumpf in "Taschenbuch der Kunststoff-Additive", herausgegeben von R. Gächter, H. Müller, Hanser-Verlag, München 1989, 3.Auflage, S.549ff beschrieben, ist neben Füllstofftyp und Formanisotropie besonders die Haftung zwischen dispergierten Füllstoffen und kontinuierlicher Thermoplast-Matrix ausschlaggebend. Eine Reihe von nieder- und hochmolekularen Haftvermittlern, auch als Kupplungsmittel oder Kompatibilisatoren genannt, sind in der Literatur bekannt. Beispielsweise werden, wie von E.P.Plueddemann in "Silane Coupling Agents", Plenum Press, New York 1982, beschrieben, Silanverbindungen, z.B. 3-Glycidyloxypropyl-trimethoxysilan, als Haftvermittler für gefüllte Polymere eingesetzt. Ferner werden dicarbonsäureanhydrid-funktionalisierte Polymere, hergestellt durch Pfropfen von Thermoplasten mit Maleinsäureanhydrid, als Kompatibilisatoren eingesetzt.

Haftvermittler können während der Verarbeitung zugesetzt oder vor der Verarbeitung auf die Füllstoffoberfläche aufgebracht werden. Beim Füllen von Thermoplasten werden Eigenschaftssynergien von hoher Steifigkeit und Zähigkeit vielfach nicht erreicht. So ist beim Einsatz von verstärkenden Füllstoffen die Erhöhung der Steifigkeit mit stark reduzierten Bruchdehnungen und Verlusten an Schlagzähigkeit verbunden. Desweiteren sind bei verstärkend wirkenden anisotropen Schichtsilikaten wie z.B. Talkum konventionelle Haftvermittler, z.B. funktionalisierte Silane, unwirksam. Anisotrope Füllstoffe, z.B. Wollastonite, deren Oberfläche nicht modifiziert ist, können starken Abrieb bei den Verarbeitungsmaschinen bewirken. In den in DE 4132671 beschriebenen Polymerblends, bestehend aus einem Thermoplast und einem in-situ gebildeten Polyester durch Reaktion von Oxiranen, die von Pflanzenderivaten abgeleitet sind, und Dicarbonsäureanhydriden, sind flexibilisierte Formmassen beschrieben, deren Schlagzähigkeiten durch Polyesterzusatz auf Kosten der Steifigkeit erhöht werden.

Es wurde überraschend gefunden, daß durch gleichzeitigen Zusatz von Dicarbonsäureanhydriden als Komponente (C) und Oxiranen als Komponente (D) während der Verarbeitung von gefüllten thermoplastischen Polymeren die Oberflächen der Füllstoffkomponente (B) durch Polyester modifiziert werden kann. Je nach Beschaffenheit der Komponenten (B) und (C) können ungewöhnliche Eigenschaftssynergien, z.B. von hoher Steifigkeit, hoher Fließspannung und hoher Schlagzähigkeit, realisiert werden.

Besonderes Kennzeichen der vorliegenden Erfindung ist die in-situ Herstellung von Polyestern durch Reaktion der Dicarbonsäureanhydridkomponente (C) mit der Oxiran-Komponente (D) in einer Polymerschmelze der Thermoplastkomponente (A), wobei die Gegenwart der Füllstoffkomponente (B) zwingend erfoderlich ist. Durch erfindungsgemäße Wahl der Verträglichkeiten der Komponenten (A), (B), (C), (D) wird die Ausbildung einer die Komponente (B) umhüllende Polyestergrenzschicht erzielt. Auf diese Weise können ungewöhnliche Eigenschaftskombinationen der mit (B) gefüllten Thermoplasten erreicht werden.

Bei der thermoplastischen Komponente (A) handelt es sich um einen oder mehrere Kunststoffe, die bei Temperaturen bis maximal 400°C aus der Schmelze verarbeitbar sind. Neben Polyestern, Polyamiden, Polyarylaten, Polycarbonaten sind unpolare und polaren Olefinhomo- und Copolymere besonders bevorzugt, z.B. isotaktischen Polypropylen, syndiotaktisches Polypropylen, Stereoblock-Polypropylene, Propencopolymere, z.B. Poly(propen-co-ethen), Polypropylenblends, z.B. Polypropylen/Poly(ethen-co-propen) oder Polypropylen/Poly(ethen-co-propen-co-dien), Polyethylen hoher und diederer Dichte, Ethencopolymere mit 1-Olefinen wie z.B. Buten-1, Hexen-1, Octen-1, Ethen, Poly(ethen-co-styrol), Poly(ethen-co-vinylacet), Poly(ethen-co-vinylalkohol), Ethencopolymere mit (Meth)acrylaten, z.B. Methylmethacrylat, Butylacrylat. Ferner sind als Komponente (A) besonders geeignet Polystyrol sowie Styrolcopolymere, z.B. Styrol-1,3-Butadien, Styrol/Acrylnitril, Styrol/1,3-Butadien/Acrylnitril, oder Poly(styrol-co-maleinsäureanhydrid). Die zahlenmittleren Molekulargewichte der Komponente (A) variieren zwischen 10000 und 500000g/mol. Bevorzugt sind Anteile der Komponente (A) an der Mischung aus (A), (B), (C) und (D) von >30 Gew.-%, ganz besonders bevorzugt >50 Gew.-%.

Bei der Komponente (B) handelt es sich um Füllstoffe mit über 50Gew.-% anorganischem Anteil und mittleren Partikeldurchmessern <100µm. Bevorzugt sind anorganische Füllstoffe und anisotrope Füllstoffe mit Aspektverhätnis >1. Beispiele für Komponente (B) sind Silikatverbindungen, z.B. Glaskugeln, Talkum, Wollastonit, Glimmer, Kaolin, Mica, Quarz, pyrogene Kieselsäure, Alkali-Aluminiumsilikate, z.B. Feldspat, Metallcarbonate, z.B. Calciumcarbonat und Dolomit, Metalloxid, z.B. Magnesium-, Calcium- und Zinkoxid, Metallhydroxide oder gemischte Metalloxidhydroxide, z.B. Aluminiumtrihydryat, Metallsulafte, z.B. Calcium- oder Bariumsulfat, sowie Carbide wie SiC, Sulfide wie z.B. Molybdänsulfid. Ganz besonders bevorzugt sind Talkum und Wollastonit. Der gewichtsprozentuale Anteil der Komponente (B) an der Mischung aus (A), (B), (C) und (D), variiert zwischen 10 und 70, ganz besonders bevorzugt sind 40 bis 60Gew.-% (B).

Die Komponente (C) besteht aus einem oder mehreren linearen, verzweigten oder cyclischen, nieder- oder hochmolekularen Mono-, Di-, Tri-, Tetra- oder Polycarbonsäureanhydriden mit dem Strukturelement R₁(CO-O-CO)ₓ, worin R₁ zwei- oder mehrwertige, aliphatische, cycloaliphatische, aromatische, araliphatische, heterocyclische oder heteroatomhaltige Reste bedeuten und x eine ganze Zahl von 1 bis 10 ist, oder ein oder mehrere Polycarbonsäureanhydride der allgeinenen Strukturformel (CO-R₂-CO-O)_{y}, wobei R₂ ein zweiwertiger aliphatischer, cycloaliphatischer, aromatischer, araliphatischer, heterocyclischer oder heteroatomhaltiger Rest bedeutet und y eine ganze Zahl von 1 bis 100 ist. Bei den Verbindungen des Strukturtyps R₁(CO-O-CO)ₓ handelt es sich bevorzugt um Phthalsäureanhydrid, Bernsteinsäureanhydrid, Adipinsäureanhydrid, Ithaconsäureanhydrid, Maleinsäureanhydrid oder Copolymere von ungesättigten Dicarbonsäureanhydriden, z.B. Poly(styrol-co-maleinsäureanhydrid), Poly(ethen-co-melinsäureanhydrid). Bei Verbindungen des Strukturtyps R₁(CO-O-CO)x handelt es sich um lineare, cyclische oder verzweigte oligo- oder polymere Dicarbonsäureanhydride, gebildet durch Wasserabspaltung aus Dicarbonsäuren, z.B. Sebazinsäure, Terephthalsäure, Isophthalsäure, Suberinsäure, Dimer- und Trimerfettsäure sowie deren Gemische. Die Wasserabspaltung kann in dem Fachmann bekannter Art und Weise durchgeführt werden, z.B. durch Erhitzen in der Gegenwart von Acetanhydrid.

Desweiteren kann es sich bei Komponente (C) um carbonsäureanhydridfunktionelle Oligo-und Polymere handeln, die während der Vearbeitung der erfindungsgemäßen Mischungen hergestellt werden. Bevorzugt sind Kombinationen von Maleinsäureanhydrid mit Styrol oder Vinyl- oder isopropenyl-substituierten Aromaten, die in Gegenwart oder Abwesenheit von Radikalstartern während der Verarbeitung copolymerisiert werden. Bevorzugtes molares Mischungsverhältnis von olefinisch ungesättigtem Anhydrid und vinyl- bzw. propenyl-substituierten Aromaten ist 0,8 bis 1,2, ganz besonders bevorzugt 1,0.

Bei der Komponente (C) handelt es sich bevorzugt um dicarbonsäureanhydrid-funktionalisierte Thermoplasten, thermoplastische Elastomere oder Elastomere, bevorzugt Flüssigkautschuke. Die Dicarbonsäureanhydrid-Funktionalisierung kann durch radikalisches Aufpfropfen von olefinisch ungesättigten Anhydriden, z.B. von Malein- oder Ithaconsäureanhydriden, an Polymere erfolgen. Ferner können olefinisch ungesättigte Dicarbonsäureanhydride an Doppelbindung über die En-Reaktion angelagert werden. Ganz besonders bevorzugt sind mit maleinsäureanhydrid-gepfropfte Komponenten (A), z.B. Polypropylen, Polyethylen sowie deren Copolymere. Durch En-Reaktion können olefinisch ungesättigte Dicarbonsäureanhydride auf olefin-terminiertes Oligo-und Poly(1-olefin), insbesondere Polypropylen, oder Dien-Homo-und -copolymere, z.B. Oligo- und Polybutadien, Oligo- und Polyisopren, Oligo- und Poly(butadien-co-acrylnitril) gepfropft werden. Bevorzugte elastomere Komponenten (C) sind maleinsäureanhydrid-gepfropfte Polystyrol-block-Polybutadien bzw. Polystyrol-block-Polyisopren Di-, Tri- und Multiblockcopolymere, insbesondere maleinsäureanhydrid-gepfropftes Polystyrol-block-Poly(ethen-co-buten-1)-block-Polystyrol (hydriertes Polystyrol-block-Polybutadien-block-Polystyrol) Triblockcopolymer. Der Dicarbonsäureanhydridgehalt der polymeren Komponenten (C) variiert zwischen 0.01 und 50Gew.-%. Besonders bevorzugt sind Blends aus thermoplastischen und thermoplastisch-elastomeren Komponenten (C), z.B. von maleinsäureanhydrid-gepfropfter Komponente (A) mit maleinsäureanhydridgepfropftem Poly(styrol)-block-Poly(ethen-co-buten)-block-Polystyrol. Die Komponente (C) wird bezogen auf die Mischung aus (A), (B), (C) und (D) in 0.01 bis 10 Gew.-% eingesetzt.

Bei der Komponente (D) handelt es sich um lineare, verzweigte oder cyclische nieder- und hochmolekulare Verbindungen mit mindestens einer Oxirangruppe. In dem Fachmann bekannter Weise können Oxiran-Verbindungen entweder durch Umsetzung von Alkoholen, Phenolen, Aminen, Amiden oder Carbonsäuren mit Epichlorhydrid und anschließender Dehydrochlorierung, durch Adduktbildung von Bisphenolen mit überschüssigem Di-oder Polyglycidylverbindungen oder durch Oxidation von linearen, verweigten oder cyclischen mono- oder polyfunktionellen Olefinen dargestellt werden. Bevorzugt handelt es sich um mono- oder polyfunktionelle Glycidylderivate von Alkoholen, z.B. Butandiol, Hexandiol, von Phenolen, z.B. Bisphenol A, Novolak, von Aminen, z.B. Aminophenol, von Carbonsäuren, z.B. Trimesinsäure, Amiden, z.B. Isocyanuraten, Terephthalsäurediamiden. Oligo- und polymere Oxirane werden durch Reaktion von Bisphenolen mit Di-oder Polyglycidylverbindungen , z.B. von Bisphenol A mit Bisphenol-A-digylcidylethern, hergestellt. Als Ausgangsmaterialien für die Oxiransynthese durch Oxidation eignen sich Mono- und Polyolefine, z.B. Norbornen, Cyclohexen, Dicyclopentadien, Cyclohexenylcyclohexencarboxylat, Oligo-und Polybuatdien. Besonders bevorzugt sind zähmodifizierte Epoxidharze. Diese können in dem Fachmann bekannter Art und Weise hergestellt werden, beispielsweise durch Adduktieren von reaktiven Flüssigkautschuken, z.B. carbonsäure-terminierte Polyester, Polytetrahydrofuran, Polypropylenglykolen, Poly(butadien-co-acrylnitril) mit überschüssigem Epoxidharz. Desweiteren können olefinisch ungesättigte Oxirane polymerisiert werden. Ganz besonders bevorzugt sind Homo- und Copolymere von Glycidylmethacrylat, die entweder vor oder während der Verarbeitung der erfindungsgemäßen Zusammensetzungen gebildet werden. Die Oxiran-Komponente (D) wird bezüglich der Mischung aus (A), (B), (C) und (D) in gewichtsprozentualen Anteilen von 0.01 bis 50, bevorzugt 0.1 bis 10 eingesetzt.

Besonders bevorzugt sind Mischungen aus (A), (B), (C) und (D), wobei der aus (C) und (D) hergestellte Polyester mindesten eine Silangruppe aufweist. Bei der Silangruppe handelt es sich um Mono-, Di- oder Trisalkoxysilane, wobei die Alkoxygruppe von linearen oder verzweigten Alkohlen abgeleitet ist, z.B. Methanol, Ethanol, Propanol, Isopropanol, Butanol, Ethylenglykol oder deren Mischungen. Beispielsweise können Oxiran-Silane, z.B. 3-Glycidylpropyl-trimethoxysilan, teilweise oder vollständig Komponente (D) ersetzen.

Neben den oben beschriebenen Komponenten können weitere Stoffe zugesetzt werden. Zusatzstoffe sind ein oder mehrere Farbmittel, z.B. anorganische und organische Pigmente, Ruß, optische Aufheller, Antioxidantien wie z.B. sterisch gehidnerte Phenole, Metalldesaktivatoren, Lichtschutzmittel wie z.B. sterisch gehinderte Amine und Tetramethylpiperidinderivate, Weichmacher und Gleitmittel, Treibmittel, Flammschutzmittel, Antistatika, Biostabilisatoren, Lang- und Kurzfasern, Keimbildner und Haftvermittler wie z.B. Titanate, Zirkonate und Silan- bzw. Alkoxysilanverbindungen mit funktionellen Gruppen, die von Oxiranen verschieden sind.

Die Reaktion der Komponenten (C) und (D) wird in der Schmelze der Komponente (A) in der Gegenwart der Komponente (D) bei Temperaturen bis zu maximal 400°C durchgeführt. Bevorzugt gibt man (C) und (D) bzw (D) und (C) nacheinander zur Mischung aus (A) und (B). Die Komponenten (C) und (D) werden so ausgewählt, daß im Vergleich zu (A) und (B) ein Oberflächengradient entsteht und die Anreicherung der Komponenten (C) und (D) an der Oberfläche von (B) begünstigt wird. Unter diesen Bedingungen findet die Reaktion von (C) und (D) an der Phasengrenzfläche statt. Verwendet man als Komponente (C) olefinisch ungesättigte Dicarbonsäureanhydride, z.B. Maleinsäureanhydrid, kann Polyestersynthese und Pfropfen der Komponente (A) gleichzeitig ausgeführt werden. In diesem Fall werden bei der Polyesterherstellung der Mischung aus (C) und (D) Radikalinitiatoren, z.B. Peroxide oder Azoverbindungen, zugesetzt, deren Polarität so gewählt wird, daß die Matrix von (A) nicht vernetzt wird. Das Mischungsverhältnis von (C) und (D) wird so gewählt daß das Molverhältnis Oxiran/Dicarbonsäureanhydrid zwischen 0.5 und 2.0 mol/mol, ganz bevorzugt 0.75 bis 1.25 mol/mol variiert. Der gewichtsprozentuale Anteil an Polyester, entsprechend dem Reaktionsprodukt aus (C) und (D), variiert bezogen auf die Mischung von (A), (B), (C) und (D) zwischen 1 und 20. Als Reaktionsbeschleuniger kann ferner die Komponente (E), bestehend aus Imidazolen, tertiären oder quarternären aliphatischen, cyclischen oder aromatischen Aminen, tertiären oder quarternären Phosphorverbindungen oder Metallkomplexen, zugesetzt werden. Bevorzugt sind Metallkomplexe wie z.B. Acetylacetonate des Chroms, Zirkons, Magnesiums, Zinks und Aluminiums. Bezogen auf die Mischung aus (C) und (D) werden 0.01 bis 5 Gew.-% des Reaktionsbeschleunigers zugesetzt.

Die oben bechriebenen Gemische eignen sich für die Herstellung von Formmassen, Filmen, Folien, Schläuchen, Klebstoffen, Extrudaten und Sperrschichten. Durch Erhöhung von Steifigkeiten und Zähigkeiten können Polypropylenmaterialien für konstruktive Anwendungen hergestellt werden.

### Patentbeispiele

Herstellung und Charakterisierung der erfindungsgemäßen Mischungen und Vergleichsbeispiele: Polypropylen (PPN 1060, MFI (230/2.16)= 2dg/min, Mn=63000, Mw/Mn=2,9, Tm=165°C) wurde von der Firma Hoechst AG, maleinsäureanhydrid-gepfropftes Polypropylen (ExxelorTM PO 2011, MFI(230/2.16)=125dg/min, Mn=30000, Anhydridfunktionalität: 30mmol Anhydrid/lkg PP-g-MA) von Exxon, maleiniertes hydriertes Polystyrol-block-Poly(ethene-co-but-1-en)-block-Polystyrol (KratonTM G 1901X, 208mmol Anhydrid/lkg SEBS-g-MA) von Shell und Talkum A3 (6,5µm Korndurchmesser) von der Firma Naintsch bezogen. Als Epoxidkomponenten wurden ein Epoxidfestharz (GT6071 der Firma Ciba-Geigy AG mit einem Åquivalentgewicht von 450-465g/mol und Glycidyloxypropyltrimethoxysilan (GMA) eingesetzt. Füllstoffe und anhydridfunktionelle Polymere wurden im Vakuumtrockenschrank bei 100°C 6 Stunden vorgetrocknet. Alle Mischungen wurden in einem Haake Rheomix 90 Kneter mit Doppelschnecken und 60ml Mischkammer mit Temperatur- und Drehmomentmessung durchgeführt. In eine auf 240°C vorgeheizte Mischkammer wurden Polypropylen und 30Gew.-% Talkum, 0,2g Stabilisatorgemisch (80Gew.-% IrganoxTM 1010 und 20Gew.-% IrgafosTM 168)und dann Komponente C gefolgt von Komponente D, mit 1 Gew.-% Aluminiumacetylacetonat als Reaktionsbeschleuniger, in den unten aufgeführten Mengen, zugegeben und 4 Minuten bei 60 Umdrehungen/min gemischt und danach zwischen zwei wassergekühlten Platten rasch auf Raumtemperatur abgekühlt. Nach Tempern während 10 Minuten bei 260°C, wurden 1,5mm dicke Platten in einer evakuierten Schwabenthan Polystat 100 Presse hergestellt und wie oben beschrieben rasch auf Raumtemperatur abgekühlt. Mit einem Instron 4202 Zugprüfgerät und einer 5kN Meßdose wurden gemäß DIN53455 3 bis 7 gestanzte und abgefräste Prüfkörper bei 10mm/min Querhauptsgeschwindigkeit vermessen, um aus den Zug/Dehnungs-Kurven Elastizitätsmodul, Fließspannung und Reißdehnung zu bestimmen. Die Kerbschlagzähigkeit nach Charpy wurde nach DIN 53453 mittels einem Zwick Pendelschlagwerk Modell 5102 mit einem 1J Pendel und einer Stützweite von 40mm bestimmt. Die verwendeten Formulierungen sind unten und die erhaltenen Eigenschaften in Tabelle 1 aufgeführt.
Vergleichsbeispiel V1 (PP mit 30Gew.-% Talkum A3 ohne Phasenvermittler)
   70 Teile PP
   30 Teile Talkum A3
Vergleichsbeipiel V2 (PP mit 30Gew.-% Talkum A3 und 2.5Gew.-% SEBS-g-MA)
   67,5 Teile PP
   2,5 Teile SEBS-g-MA
   30 Teile Talkum A3
Vergleichsbeispiel V3 (wie V2 aber mit 5Gew.-% SEBS-g-MA)
   65 Teile PP
   5 Teile SEBS-g-MA
   30 Teile Talkum A3
Vergleichsbeispiel V4 (wie V2 aber mit 10Gew.-% SEBS-g-MA)
   60 Teile PP
   10 Teile SEBS-g-MA
   30 Teile Talkum A3

### Beispiel 1

67,5 Teile PP
2,5 Teile SEBS-g-MA
2,5 Teile GT6071
30 Teile Talkum A3

### Beispiel 2

62.5 Teile PP
5 Teile SEBS-g-MA
2,5 Teile GT6071
30 Teile Talkum A3

### Beispiel 3

57.5 Teile PP
10 Teile SEBS-g-MA
2,5 Teile GT6071
30 Teile Talkum A3

### Beispiel 4

60 Teile PP
5 Teile PP-g-MA
5 Teile GT6071
30 Teile Talkum A3

### Beispiel 5

55 Teile PP
10 Teile PP-g-MA
5 Teile GT6071
2 Teile Phthalsäureanhydrid (PTA)
30 Teile Talkum A3

### Beispiel 6

55 Teile PP
10 Teile PP-g-MA
2 Teile Pthalsäureanhydrid (PTA)
5 Teile GT6071
1 Teil 3-Glycidyloxypropyl-trimethoxysilan (GMA)
30 Teile Talkum A3

**Tabelle 1**

| Mechanische Eigenschaften von mit 30Gew.-% Talkum A3-gefüllten Polypropylen | | | | | | | |
|---|---|---|---|---|---|---|---|
| Bsp-Nr. | Komponente C Typ | Komponente C (Gew-%) | Komponente D Typ | Komponente D (Gew.-%) | KSZa) (kJ/m²) | Young Modul (MPa) | Fließspannung (MPa) |
| V1 | - | - | - | - | 7 | 2000 | 33 |
| V2 | SEBS-g-MA | 2,5 | - | - | 10 | 1500 | 33 |
| V3 | SEBS-g-MA | 5 | - | - | 11 | 1170 | 29 |
| V4 | SEBS-g-MA | 10 | - | - | 12 | 920 | 27 |
| 1 | SEBS-g-MA | 2,5 | GT6071 | 2,5 | 6 | 1750 | 25 |
| 2 | SEBS-g-MA | 5 | GT6071 | 2,5 | 6 | 1600 | 23 |
| 3 | SEBS-g-MA | 10 | GT6071 | 2,5 | 6 | 1500 | 23 |
| 4 | PP-g-MA | 5 | GT6071 | 5 | 5 | 2600 | 42 |
| 5 | PP-g-MA | 10 | GT6071 | | | | |
| | PTA | 2 | | | 8 | 2050 | 34 |
| 6 | PP-g-MA | 10 | GT6071 | 5 | | | |
| | PTA | 2 | GMA | 1 | 4 | 2400 | 39 |

## Patentansprüche

1. Thermoplastisch verarbeitbare, Polyester und anorganische Füllstoffe enthaltende Polymergemische, die mindestens aus den folgenden vier Komponenten zusammengesetzt sind:
Komponente (A), bestehend aus einem oder mehreren thermoplastischen Polymere, die in der Schmelze bei Temperaturen bis zu 400 Grad Celsius verarbeitbar sind;
Komponente (B), bestehend aus einem oder mehreren Füllstoffen, die in den Komponenten (A), (C), (D) unlöslich sind, zu mehr als 50 Gew.-% aus anorganischen Bestandteilen bestehen, und deren mittlere Partikeldurchmessern kleiner als 100µm sind;
Komponente (C), bestehend aus einem oder mehreren linearen, verzweigten oder cyclischen, nieder- oder hochmolekularen Mono-, Di-, Tri-, Tetra- oder Polycarbonsäureanhydriden mit dem Strukturelement R₁(CO-O-CO)ₓ, worin R₁ zwei- oder mehrwertige, aliphatische, cycloaliphatische, aromatische, araliphatische, heterocyclische oder heteroatomhaltige Reste bedeuten und x eine ganze Zahl von 1 bis 500 ist, oder ein oder mehrere Polycarbonsäureanhydride der allgeinenen Strukturformel (CO-R₂-CO-O)_{y}, wobei R₂ ein zweiwertiger aliphatischer, cycloaliphatischer, aromatischer, araliphatischer, heterocyclischer oder heteroatomhaltiger Rest bedeutet und y eine ganze Zahl von 1 bis 100 ist;
Komponente (D), bestehend aus einer oder mehreren linearen, verzweigten oder cyclischen nieder- und hochmolekulare Verbindungen, die über mindestens eine Oxirangruppe verfügen;
wobei Komponenten (C) und (D) miteinander in der Schmelze der Komponente (A) in der Gegenwart von Komponente (B) miteinader zu Reaktion gebracht werden, lineare, verzweigte oder vernetzte Polyester bilden und Komponente (B) verkapseln.

2. Gemische nach Anspruch 1, dadurch gekennzeichnet daß Komponente (A) aus unpolaren und polaren Olefinhomo- und Copolymeren besteht.

3. Gemische nach Anspruch 2, dadurch gekennzeichnet daß Komponente (A) Polypropylen oder eine Propencopolymer ist.

4. Gemische nach Anspruch 2, dadurch gekennzeichnet, daß Komponente (A) Polyethylen, Ethen/Buten-1, Ethen/Hexen-1, Ethen/Octen-1, Ethen/Vinylacetat, Ethen/methylmethacrylat, oder Ethen/Styrol ist.

5. Gemische nach Anspruch 2, dadurch gekennzeichnet, daß Komponente (A) Polystyrol, Styrol/1,3-Butadien, Styrol/Acrylnitril, Styrol/1,3-Butadien/Acrylnitril ist.

6. Gemische nach Anspruch 1, dadurch gekennzeichnet, daß Komponente (B) Silikatverbindungen darstellt, z.B. Glaskugeln, Talkum,Wollastonit, Glimmer, Kaolin, Mica.

7. Gemische nach Anspruch 1, dadurch gekennzeichnet, daß Komponente (B) ein Metallcarbonat, Metalloxid, Metallhydroxid oder gemischtes Metalloxidhyderoxid ist, z.B. Calciumcarbonat, Calciumoxid, Magnesiumoxid, Aluminiumtrihydrat.

8. Gemische nach Anspruch 1, dadurch gekennzeichnet, daß Komponente (C) ein Dicarbonsäureanhydrid ist, z.B. Phthalsäureanhydrid, Bernsteinsäureanhydrid.

9. Gemische nach Anspruch 1, dadurch gekennzeichnet, daß Komponente (C) ein hochmolekulares mono-oder polyfunktionelles Dicarbonsäureanhydrid ist, das durch Pfropfen von Polyolefinen mit Maleinsäureanhydride oder Ithaconsäureanhydrid entstanden ist.

10. Gemische nach Anspruch 1, dadurch gekennzeichnet, daß Komponente (C) ein polymeres Anhydrid mit Anhydridfunktionalität im Polymerrückgrat ist, welches durch Wasserabspaltung aus niedermolekularen Dicarbonsäuren hergestellt werden kann.

11. Gemische nach Anspruch 1, dadurch gekennzeichnet daß Komponente (D) die Oxiranverbindung ein Mono-, Di- oder Polyglycidylderivat von Alkoholen, Phenolen, Aminophenolen, Aminen oder Carbonsäureamiden ist.

12. Gemische nach Anspruch 1, dadurch gekennzeichnet, daß Komponente (D) durch Oxidation von ein- oder mehrfach olefinisch ungesättigten Verbindungen entstanden ist.

13. Gemische nach Anspruch 9, dadurch gekennzeichnet, daß Komponente (C) aus maleinsäure- oder ithaconsäureanhydrid-gepfropften Elastomeren, z.B. Ethen/Propen, Ethen/Propen/Dien, oder hydriertes Polystyrol-block-Polybutadien-block-Polystyrol besteht.

14. Gemische nach Anspruch 9, dadurch gekennzeichnet, daß Komponente (C) mindestens einen dicarbonsäureanhydrid-funktionalisierte Thermoplasten und mindestens ein dicarbonsäureanhydrid-funktionalisiertes Elastomer oder thermoplastisches Elastomer enthält.

15. Gemische nach Ansprüchen 1-14 dadurch gekennzeichnet, daß ein oder mehrere Mono-, Di- oder Trialkoxysilan-verbindungen den Komponenten (B), (C) und (D) zugesetzt werden.

16. Gemische nach Anspruch 1, dadurch gekennzeichnet, daß der gewichtsprozentuale Anteil der Komponente A zwischen 90 und 50, der gewichtsprozentuale Anteil der Komponente (B) zwischen 10 und 70 und der gewichtsprozentuale Anteil an Polyester, gebildet durch Reaktion der Komponenten (C) und (D), zwischen 1 und 20 variiert.

17. Verfahren zur Herstellung von Gemischen nach Anspruch 1, dadurch gekennzeichnet, daß zu einem Gemisch aus (A) und (B) die Komponenten (B) und (C) gegeben werden, wobei das Molverhältnis von Epoxid und Dicarbonsäureanhydrid zwischen 0,5 und 2,0 variieren kann.

18. Verfahren zur Herstellung von Gemischen nach Anspruch 1, dadurch gekennzeichnet daß als Reaktionsbeschleuniger eine Komponente (E) bestehend aus Imidazolen, tertiären oder quarternären aliphatischen, cyclischen oder aromatischen Aminen, tertiären oder quarternären Phosphorverbindungen oder Metallkomplexen zugesetzt wird.

19. Verwendung von Gemischen gemäß Ansprüchen 1-15 für die Herstellung von Formmassen, Filmen, Folien, Schläuchen, Klebstoffen, Extrudaten und Sperrschichten.

## Claims

1. Thermoplastic, workable polyester and inorganic filling agents containing polymer mixtures that are composed of at least the following four components:
Component (A), consisting of one or more thermoplastic polymers, which are workable in the melt at temperatures up to 400 °C;
Component (B), consisting of one or more filling agents that are insoluble in components (A), (C), (D) are comprised more than 50 wt.% of inorganic components, and have an average particle diameter smaller than 100µm;
Component (C), consisting of one or more linear, branched or cyclic, low-molecular or high-molecular mono-, di-, tri-, tetra- or polycarboxylic acid anhydrides with the structural element R₁(CO-O-CO)ₓ, in which R₁ is a bivalent or polyvalent, aliphatic, cycloaliphatic, aromatic, araliphatic, heterocyclic or heteroatom-containing groups and x is a whole number from 1 to 500, or one or more polycarboxylic acid anhydrides of the general structural formula (CO-R₂-CO-O)_{y}, R₂ being a bivalent aliphatic, cycloaliphatic, aromatic, araliphatic, heterocyclic or heteratom- containing group and y a whole number from 1 to 100;
Component (D), consisting of one or more linear, branched or cyclic low-molecular and high-molecular compounds having at least one oxirane group;
Components (C) and (D) being brought to reaction together in the melt of component (A) in the presence of component (B), forming linear, branched or linked polyesters and encapsulating component (B).

2. Mixtures according to Claim 1 characterized in that component (A) consists of nonpolar and polar olefinhomopolymers and copolymers.

3. Mixtures according to Claim 2 characterized in that component (A) is polypropylene or a propene copolymer.

4. Mixtures according to Claim 2 characterized in that component (A) is polyethylene, ethene/butene-1, ethene/hexene-1, ethene/octene-1, ethene/vinylacetate, ethene/methylmethacrylate, or ethene/styrene.

5. Mixtures according to Claim 2 characterized in that component (A) is polystyrene, styrene/1,3-butadene, styrene/acrylonitrile, styrene/1,3-butadene/acrylonitrile.

6. Mixtures according to Claim 1 characterized in that component (B) represents silicate compounds, e.g., glass beads, talc, wollastonite, micaceous material, kaolin, and mica.

7. Mixtures according to Claim 1 characterized in that component (B) is a metal carbonate, metallic oxide, metallic hydroxide or mixed metallic oxide hydroxide, e.g., calcium carbonate, calcium oxide, magnesium oxide, aluminum trihydrate.

8. Mixtures according to Claim 1 characterized in that component (C) is a dicarboxylic anhydride, e.g., phthalic anhydride, succinic anhydride.

9. Mixtures according to Claim 1 characterized in that component (C) is a high molecular mono- or polyfunctional dicarboxylic anhydride that was created by grafting polyolefins with maleic anhydrides or itaconic anhydride.

10. Mixtures according to Claim 1 characterized in that component (C) is a polymeric anhydride with anhydride functionality in the polymer backbone, which can be produced by splitting water out of low-molecular dicarboxylic acids.

11. Mixtures according to Claim 1 characterized in that component (D), the oxirane compound, is a mono-, di- or polyglycidyl derivative of alcohols, phenols, aminophenols, amines or carboxylic acid amides.

12. Mixtures according to Claim 1 characterized in that component (D) arose from oxidation of monounsaturated or polyunsaturated olefinic compounds.

13. Mixtures according to Claim 9 characterized in that component (C) consists of elastomers grafted with maleic anhydride or itaconic anhydride, e.g., ethene/propene, ethene/propene/diene, or hydrogenated block copolymer polystyrene-polybutadiene-polystyrene.

14. Mixtures according to Claim 9 characterized in that component (C) contains at least one dicarboxylic anhydride functionalized thermoplastic and at least one dicarboxylic anhydride functionalized elastomer or thermoplastic elastomer.

15. Mixtures according to Claim 1-14 characterized in that one or more mono-, di- or trialkoxysilane compounds are added to components (B), (C), and (D).

16. Mixtures according to Claim 1 characterized in that the percent weight portion of component (A) varies between 90 and 50, the percent weight portion of component (B) varies between 10 and 70 and the percent weight portion of polyester, formed by reacting components (C) and (D), between 1 and 20.

17. Process for producing mixtures according to Claim 1 characterized in that components (B) and (C) can be added to a mixture of (A) and (B), wobei the molar ratio of epoxide and dicarboxylic anhydride can vary between 0.5 and 2.0.

18. Process for producing mixtures according to Claim 1 characterized in that a component (E) consisting of imidazolene, tertiary or quaternary aliphatic, cyclic or aromatic amines, tertiary or quaternary phosphorous compounds or metal complexes can be added as inductor.

19. Use of mixtures according to Claim 1-5 for the production of molding materials, films, sheeting, tubing, adhesives, extrudates and barrier coats.

## Revendications

1. Mélanges de polymères contenant du polyester et des matières de remplissage inorganiques pouvant être traités par une technique thermoplastique. Ils sont au moins constitués des quatre composants suivants :
composant (A), constitué d'un ou plusieurs polymères thermoplastiques pouvant être traités à la fonte à des températures pouvant atteindre 400 degrés Celsius au maximum ;
composant (B), constitué d'une ou de plusieurs matières de remplissage insolubles dans les composants (A), (C), (D) et constituées de composants inorganiques de plus de 50 % en poids et dont les diamètres moyens des particules sont inférieurs à 100 µmm ;
composant (C), constitué d'un ou de plusieurs anhydrides monocarboniques, bicarboniques, tricarboniques, tétracarboniques ou polycarboniques linéaires, ramifiés ou cycliques, de faible poids moléculaire ou de poids moléculaire élevé avec l'élément structural R₁ (CO-O-CO)ₓ, dont R₁ signifie des restes bivalents ou à plusieurs valences, aliphatiques, cycloaliphatiques, aromatiques, araliphatiques, hétérocycliques ou contenant des hétéroatomes et x est un nombre entier de 1 à 500, ou un ou plusieurs anhydrides polycarboniques de formule de structure générale (CO-R₂-CO-O)_{y,} dont R₂ signifie un reste bivalent aliphatique, cycloaliphatique,
aromatique, araliphatique, hétérocyclique ou contenant des hétéroatomes et y est un nombre entier de 1 à 100 ;
composant (D), constitué d'une ou de plusieurs combinaisons linéaires, ramifiées ou cycliques de faible poids moléculaire et de poids moléculaire élevé disposant d'au moins un groupe d'oxiranes ;
Lorsque le composant (C) et le composant (D) sont mis en réaction dans la fonte du composant (A) en présence du composant (B), ils forment des polyesters linéaires, ramifiés ou réticulés et blindent le composant (B).

2. Mélanges selon la revendication 1, caractérisés par le fait que le composant (A) est constitué d'homopolymère et de copolymères d'oléfine.

3. Mélanges selon la revendication 2, caractérisés par le fait que le composant (A) est un polypropylène ou un copolymère de propène.

4. Mélanges selon la revendication 2, caractérisés par le fait que le composant (A) est du polyéthylène, de l'éthylène/butylène-1, de l'éthylène/hexène-1, de l'éthylène/octène-1, de l'éthylène/acétate vinylique, de l'éthylène/méthacrylate de méthyle ou de l'éthylène/styrène.

5. Mélanges selon la revendication 2, caractérisés par le fait que le composant (A) est du polystyrène, du styrène/1,3-butadiène, du styrène/acrylnitrile, du styrène/1,3-butadiène/acrylnitrile.

6. Mélanges selon la revendication 1, caractérisés par le fait que le composant (B) représente des combinaisons de silicate, p.ex. sphères de verre, talc, wollastonite, mica, kaolin.

7. Mélanges selon la revendication 1, caractérisés par le fait que le composant (B) est un carbonate métallique, un oxyde métallique, un hydroxyde métallique ou un oxydhydéroxyde métallique mélangé, p.ex. carbonate de calcium, oxyde de calcium, oxyde de magnésium, trihydrate d'aluminium.

8. Mélanges selon la revendication 1, caractérisés par le fait que le composant (C) est un anhydride de l'acide oxalique, p.ex. anhydride phtalique, anhydride succinique.

9. Mélanges selon la revendication 1, caractérisés par le fait que le composant (C) est un anhydride de l'acide oxalique de poids moléculaire élevé monofonctionnel ou polyfonctionnel issu de l'implantation de polyoléfines avec anhydride de l'acide maléique ou anhydride de l'acide itaconique.

10. Mélanges selon la revendication 1, caractérisés par le fait que le composant (C) est un anhydride polymère avec fonctionnalité anhydride dans la chaîne polymérique principale pouvant être fabriqué par la déshydratation des acides oxaliques de faible poids moléculaire.

11. Mélanges selon la revendication 1, caractérisés par le fait que le composant (D) la combinaison d'oxirane est un dérivé monoglycidile, biglycidyle ou polyglycidyle d'alcools, de phényles, d'aminophénols, d'amines ou d'amides de l'acide oxalique.

12. Mélanges selon la revendication 1, caractérisés par le fait que le composant (D) est issu de l'oxydation de plusieurs combinaisons oléfiniques monoinsaturées ou polyinsaturées.

13. Mélanges selon la revendication 9, caractérisés par le fait que le composant (C) est constitué d'élastomères implantés d'acide maléique ou d'anhydride de l'acide itaconique, p.ex. éthylène/propylène, éthylène/propylène/olène ou polystyrène-bloc-polybutadiène-bloc-polystyrène hydrogéné.

14. Mélanges selon la revendication 9, caractérisés par le fait que le composant (C) contient au moins un thermoplastique fonctionnalisé d'anhydride de l'acide oxalique et au moins un élastomère fonctionnalisé d'anhydride de l'acide oxalique ou un élastomère thermoplastique.

15. Mélanges selon les revendications 1-14, caractérisés par le fait qu'une ou plusieurs combinaisons de monoalcoxysilane, de dialcoxysilane ou de trialcoxysilane sont ajoutées aux composants (B), (C) et (D).

16. Mélanges selon la revendication 1, caractérisés par le fait que la part du pourcentage en poids du composant (A) entre 90 et 50, la part du pourcentage en poids du composant (B) entre 10 et 70 et la part du pourcentage en poids du polyester, formé par la réaction des composants (C) et (D) varient entre 1 et 20.

17. Méthodes pour la fabrication de mélanges selon la revendication 1, caractérisées par le fait que les composants (B) et (C) sont ajoutés à un mélange de (A) et (B) et le rapport molaire de la résine époxyde et de l'anhydride de l'acide oxalique peut varier entre 0,5 et 2,0.

18. Méthodes pour la fabrication de mélanges selon la revendication 1, caractérisées par le fait qu'un composant (E) constitué d'imidazoles, d'amines aliphatiques, cycliques ou aromatiques tertiaires ou quaternaires, de combinaisons phosphoriques tertiaires ou quaternaires ou de complexes métalliques est ajouté en tant qu'accélérateur de la réaction.

19. Utilisation de mélanges selon les revendications 1-15 pour la fabrication de matières moulables, de films, de feuilles, de tuyaux, de colles, de produits d'extrusion et de couches isolantes.
